Europäisches Patentamt

**European Patent Office**

**Office européen des brevets**

(11) Numéro de publication: **0 155 878**

A1

# (12) DEMANDE DE BREVET EUROPEEN

(21) Numéro de dépôt: **85400361.3**

(22) Date de dépôt: **26.02.85**

(51) Int. Cl.⁴: **G 01 K 7/12**

(30) Priorité: **28.02.84 FR 8403039**

(43) Date de publication de la demande:
**25.09.85 Bulletin 85/39**

(84) Etats contractants désignés:
**AT BE CH DE GB IT LI LU NL SE**

(71) Demandeur: **COMPAGNIE D'INFORMATIQUE MILITAIRE SPATIALE ET AERONAUTIQUE**
**25, rue de Courcelles**
**F-75008 Paris(FR)**

(72) Inventeur: **Marouby, Daniel**
**THOMSON-CSF SCPI 173, bld Haussmann**
**F-75379 Paris Cedex 08(FR)**

(72) Inventeur: **Menard, Christian**
**THOMSON CSF SCPI 173, bld Haussmann**
**F-75379 Paris Cedex 08(FR)**

(72) Inventeur: **Meuleman, Jean-Jacques**
**THOMSON CSF SCPI 173, bld Haussmann**
**F-75379 Paris Cedex 08(FR)**

(74) Mandataire: **El Manouni, Josiane et al,**
**THOMSON-CSF SCPI 173, Bld Haussmann**
**F-75379 Paris Cedex 08(FR)**

(54) Dispositif de mesure de température d'un corps par thermocouple.

(57) L'invention concerne un dispositif de mesure de température d'un corps comportant un thermocouple (18) et un système de traitement (22) de la mesure de la température et comportant de plus deux fils de connexion (23 et 24) de même métal différent des deux métaux constituant le thermocouple (18) et destinés à le relier au système de traitement des moyens de jonction (27) de ces fils (23 et 24) au thermocouple (18), situés aux points (S et F) de soudure froide et un dispositif de mesure (28) de température de ces moyens de jonction situé à proximité de ces moyens.

## FIG_3

## DISPOSITIF DE MESURE DE TEMPERATURE
## D'UN CORPS PAR THERMOCOUPLE

La présente invention concerne un dispositif de mesure de température d'un corps par thermocouple.

Une utilisation intéressante concerne la mesure de températures d'un moteur de char diesel à turbo-compresseur et plus particulièrement la mesure dans la chambre de combustion de la turbine et celle dans les tubulures d'admission d'un moteur diesel.

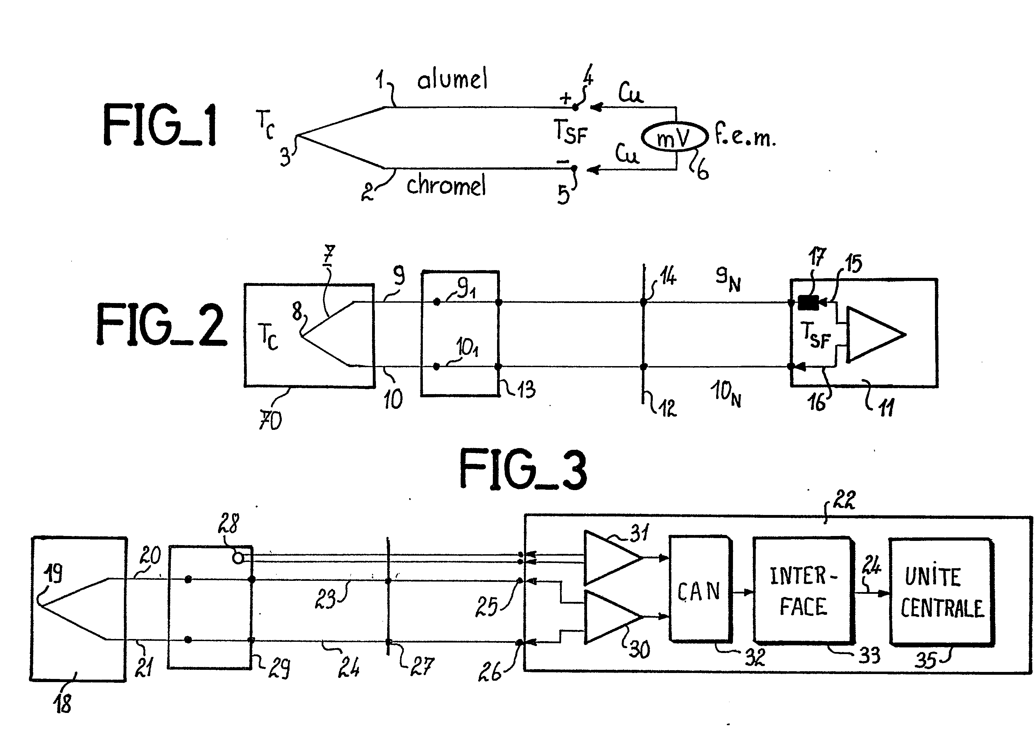

La technique actuelle de mesure de la température généralement élevée d'un dispositif industriel ou d'un dispositif d'armement utilise un thermocouple. Un thermocouple est un instrument de mesure de température réalisé à partir de la jonction 3 de deux fils 1 et 2 de métal de natures différentes, comme par exemple de l'alumel et du chromel, du fer et du constantan, etc.... (fig. 1). Aux extrémités 4 et 5 des deux fils, opposés à la jonction 3, apparaît une force électromotrice (fem) si la température de ces extrémités 4 et 5 est différente de la température de la jonction 3. Un appareil de mesure 6, tel qu'un voltmètre dont les bornes généralement en cuivre sont branchées aux deux extrémités 4 et 5 des fils du thermocouple, indique une force électromotrice correspondant à la différence de température entre la jonction des deux fils 1 et 2 d'alumel et de chromel entre eux d'une part et les jonctions de ces deux mêmes fils avec les bornes du voltmètre qui sont en cuivre, donc en métal de nature différente des deux autres fils, d'autre part. Quand la température aux bornes du voltmètre, dite température de soudure froide $T_{SF}$ , est égale à 0° Celsius, la f.e.m. indiquée correspond à la température $T_C$ du thermocouple en contact avec le corps. Par contre quand la température $T_{SF}$ est différente de 0° C, il faut la rajouter à la valeur de $T_C$, ce qui correspond en tension à ajouter à la f.e.m. lue sur le voltmètre la f.e.m. correspondant à la température à laquelle est située la soudure froide.

Un thermocouple utilisé dans un dispositif de mesure de température, comportant par exemple un système de traitement de données, est relié à ce dernier par des fils de connexion souvent de grande longueur. Généralement, ces fils sont constitués par une pluralité de portions de fils connectés les unes aux autres. Un dispositif de mesure de température d'un corps par thermocouple, actuellement utilisé, et comportant un système de traitement de la mesure de la température est représenté sur la figure 2. Il comporte tout d'abord un thermocouple 7 placé sur le corps 70 dont la température est à mesurer, réalisé à partir de la jonction 8 de deux fils 9 et 10 de métal de natures différentes, par exemple de l'alumel et du chromel. Il comporte de plus un système de traitement 11, du type calculateur, relié au thermocouple 7 par un nombre N de portions de fils métalliques $9_1$ à $9_N$ et $10_1$ à $10_N$ de même métal que chacun des fils 9 et 10 du thermocouple. La jonction entre le thermocouple 7 et les fils $9_i$ et $10_i$ se fait dans une boîte de jonction 13. Ce sont des raisons pratiques qui obligent à réaliser la connexion du thermocouple 7 au système de traitement 11 par plusieurs portions de fils et non par des fils continus, comme par exemple la traversée de cloison 12 ou la connexion à des boîtes intermédiaires. Ainsi, lorsqu'un tel dispositif de mesure de température est utilisé pour mesurer la température d'un moteur de char, le thermocouple est situé dans le moteur alors que le système de traitement se situe dans le poste de commande du char. Ce poste est séparé du moteur par une cloison pare-feu et les fils de connexion doivent passer par une boîte d'éclatement par exemple.

Or, les moyens de connexion 14 entre des portions de fils d'alumel ou de chromel sont spéciaux, ce sont des broches chromel et alumel demandant une fabrication particulière réalisée actuellement à l'étranger, ce qui a pour principaux inconvénients de présenter un coût élevé et des délais d'approvisionnement longs.

A cette première série d'inconvénients, il faut ajouter le fait que les fils de connexion $9_i$ et $10_i$ en alumel et en chromel sont connectés aux bornes 15 et 16, généralement en cuivre, du système de traitement 11 réalisant ainsi des points de soudure froide. Pour que le système de traitement 11 délivre la valeur exacte de la température du corps - du moteur de char par exemple - il est obligatoire de connaître la température de la soudure froide $T_{SF}$ comme cela a été expliqué auparavant. Or, cette mesure de la température de soudure froide est faite à l'aide d'un pont thermométrique de compensation 17, présentant un encombrement élevé, de réalisation coûteuse et devant être alimenté en courant régulé.

Ainsi, le dispositif de mesure de température par thermocouple actuellement utilisé présente des difficultés de mise en oeuvre qui sont de deux sortes. Tout d'abord d'ordre technique puisqu'il faut réaliser, tout au long de la ligne de connexion, une compensation dite de soudure froide et ensuite d'ordre économique, car les moyens de connexion ainsi que les fils de connexion utilisés doivent être d'un type bien déterminé entraînant un coût important.

Le but de la présente invention est de pallier ces inconvénients en proposant un dispositif de mesure de température par thermocouple utilisant des fils de connexion et des moyens de connexion traditionnels, de coût très réduit.

La présente invention a pour objet un dispositif de mesure de température d'un corps, tel que défini dans les revendications.

D'autres caractéristiques et avantages de l'invention apparaîtront à la lecture de la description qui suit, illustrée par les figures 1 à 3, les figures 1 et 2 étant déjà décrites, et la figure 3 représentant un dispositif de mesure de température d'un corps par

4

thermocouple, selon l'invention.

Le dispositif objet de l'invention représenté sur la figure 1, comporte tout d'abord un thermocouple 18, réalisé à partir de la jonction 19 de deux fils 20 et 21 de métal de natures différentes, par exemple alumel et chromel. La température du corps mesurée par ce thermocouple est délivrée par un système de traitement 22. La connexion entre les deux se fait contrairement au dispositif déjà connu, par deux fils 23 et 24, de même métal mais différent de ceux constituant le thermocouple, par exemple du cuivre comme les bornes d'entrée 25 et 26 du système de traitement 22. Lorsque la connexion entre le thermocouple et le système de traitement n'est pas directe, il est nécessaire de fractionner les fils de connexion en plusieurs portions $23_i$ et $24_i$ – $i$ variant de 1 à N' –, toutes de même nature et connectées entre elles par des connecteurs 27 de type classique, sans caractéristiques particulières. Etant donné que les fils métalliques de connexion 23 et 24 sont de nature différente de celles des fils 20 et 21 du thermocouple, leur jonction se fait aux points S et F dit de soudure froide dont il va être obligatoire de connaître la température $T_{SF}$ pour en déduire la valeur exacte de la température du corps dans lequel est logé le thermocouple 18. Pour cela, le dispositif de mesure selon l'invention comporte un dispositif de mesure de température 28 des moyens de jonction 29 aux points de soudure froide, ce dispositif étant situé à proximité de ces moyens et connecté au système de traitement 22 par des fils de connexion 29 tout à fait classique, en cuivre par exemple. Le dispositif de mesure de température est par exemple une sonde à semiconducteur, tenant bien en température. Cette sonde à semiconducteur est constituée par un circuit intégré se comportant comme une diode et dont la chute de tension en direct varie de 10 mV/K. Ainsi, le système de traitement 22 reçoit en entrée à la fois la température $T_c$ mesurée par le thermocouple 18 et la température $T_{SF}$ dite de soudure froide, de façon à délivrer avec exactitude la température du corps considéré. Ce système de traitement 22 comporte par exemple deux amplificateurs différentiels 30 et 31 qui reçoivent chacun en entrée respectivement la température $T_c$ délivrée par le thermocouple 18 et la température $T_{SF}$ mesurée aux points de soudure froide. Les sorties de ces deux amplificateurs sont connectées à des moyens de connexion analogique digitale 32, eux-mêmes connectés en sortie à un interface numérique 33 aboutissant, par l'intermédiaire d'une liaison omnibus 34 à une unité centrale de traitement 35. Cette unité centrale possède une mémoire et un algorithme de correction prenant en compte la température $T_{SF}$ pour délivrer, à partir de la température $T_c$ mesurée par le thermocouple, la température exacte du corps.

On constate que le dispositif de mesure de température, objet de l'invention, présente l'avantage d'utiliser des moyens simples et peu coûteux : fils de cuivre dès la sortie du thermocouple, connecteurs connus, sonde de température à semiconducteur classique. Etant donné la longueur de connexion qui peut exister parfois entre un thermocouple et le système de traitement de la température mesurée, il est très avantageux d'utiliser de tels moyens.

L'invention n'est nullement limitée au mode de réalisation qui vient d'être décrit, comprenant bien évidemment les équivalents techniques des moyens et de leurs combinaisons si elles sont effectuées dans l'esprit de l'invention et mises en oeuvre dans le cadre des revendications suivantes.

6

# REVENDICATIONS

1. Dispositif de mesure de température d'un corps, comportant un thermocouple (18) réalisé à partir de la jonction (19) de deux fils de métal de natures différentes, un système de traitement (22) de la mesure de la température, muni de bornes d'accès en métal de nature différente de celle du thermocouple, des moyens de connexion du thermocouple à ce système de traitement, comportant eux-mêmes une succession de portions de fils de connexion (23, 24) elles-mêmes reliées entre elles par des moyens de jonction (27), et un dispositif de mesure de température de soudure froide (28), permettant au système de traitement de donner la température exacte du corps à partir de la température mesurée et de la température de soudure froide, caractérisé en ce que toutes les portions de fils de connexion sont en métal identique à celui des bornes d'accès du système de traitement, et en ce que le dispositif de mesure de température de soudure froide (28) est localisé à proximité des moyens de jonction (29) situés le plus près du thermocouple.

2. Dispositif selon la revendication 1, caractérisé en ce que le thermocouple (18) est constitué par une portion d'un fil d'alumel et d'un fil de chromel, en ce que les deux fils de connexion (23 et 24) sont en cuivre et en ce que les moyens de jonction (29) de chacun des deux fils d'alumel et de chromel avec un fil de cuivre sont constitués par un connecteur de type classique.

3. Dispositif selon la revendication 1 ou 2, caractérisé en ce que le dispositif de mesure (28) de température des moyens de jonction aux points de soudure froide (29) est constitué par une sonde de température à semiconducteur.

4. Dispositif selon l'une des revendications 1 à 3, caractérisé en ce que les deux fils de connexion (23 et 24) reliant le thermocouple (18) au système de traitement (22) sont constitués par une pluralité de portions de fils ($23_i$ et $24_i$ - $\underline{i}$ variant de 1 à N), toutes de même nature, connectées entre elles par des connecteurs de type classique.

5. Dispositif selon l'une des revendications 1 à 4, caractérisé en ce que le système de traitement (22) de la mesure de la température comporte deux amplificateurs différentiels (30 et 31), recevant chacun en entrée respectivement la température du thermocouple ($T_c$) et la température de soudure froide ($T_{SF}$) et connectés en sortie à des moyens (32) de conversion analogique digitale, eux-même connectés en sortie à un interface numérique (33) aboutissant, par l'intermédiaire d'une ligne omnibus (34) à une unité centrale de traitement (35).

**FIG_1**

alumel 1  
Tc 3  
+ 4  
Cu  
mV F.e.m. 6  
TSF  
Cu  
- 5  
chromel 2

**FIG_2**

7  
8  
Tc  
70  
9  
10  
9₁  
10₁  
13  
14  
12  
9ₙ  
10ₙ  
17 15  
TSF  
16  
11

**FIG_3**

19  
18  
20  
21  
28  
29  
27  
23  
24  
25  
26  
31  
30  
CAN 32  
INTER-FACE 33  
UNITE CENTRALE 35  
24  
22

**0155878**

Numero de la demande

Office européen
des brevets

**RAPPORT DE RECHERCHE EUROPEENNE**

EP 85 40 0361

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | US-A-3 916 691 (B.R. HOLLANDER et al.) <br> * Figures 1,2; titre; colonne 2, lignes 23-57 * | 1,2 | G 01 K 7/12 |
| X | DE-A-2 452 746 (P. HANS) <br> * Page 1, paragraphe 1; figures * | 1,4 | |
| X | US-A-4 120 201 (T.J. WARGO) <br> * Titre; figures 2,3; colonne 3, ligne 28 - colonne 7, ligne 28 * | 1,2,5 | |
| X | ELECTRONIC ENGINEERING, vol. 51, no. 629, octobre 1979, pages 51-65, Londres, GB; R.F. WOOD et al.: "Electronic thermocouple processors in temparature measurement" <br> * Page 52, colonne 2 - page 65, dernière colonne; figures 3,7 * | 1-3,5 | DOMAINES TECHNIQUES RECHERCHES (Int. Cl.4) <br><br> G 01 K 7/00 |
| X | ELECTRONIC DESIGN, vol. 18, no. 6, 15 mars 1980, pages 283-285, Rochelle Park, US; J.V. DiROCCO et al.: "Mate low-level thermocouples to muCs easily with a flying-capacitor multiplexer" <br> * Figures 1,2; paragraphes 1-5 * <br><br> --- -/- | 1-5 | |

Le présent rapport de recherche a été établi pour toutes les revendications

| Lieu de la recherche | Date d'achèvement de la recherche | Examinateur |
|---|---|---|
| LA HAYE | 30-05-1985 | VISSER F.P.C. |

Office européen
des brevets

**RAPPORT DE RECHERCHE EUROPEENNE**

EP 85 40 0361

| DOCUMENTS CONSIDERES COMME PERTINENTS | | Page 2 | |
|---|---|---|---|
| Catégorie | Citation du document avec indication, en cas de besoin des parties pertinentes | Revendication concernée | CLASSEMENT DE LA DEMANDE (Int Cl 4) |
| X | IEEE TRANSACTIONS ON INDUSTRY AND GENERAL APPLICATIONS, vol. IGA-7, no. 1, janvier/février 1971, pages 144-167, New York, US; R.D. FRANCIS: "The electrical-instrument-computer interface" <br> * Page 148, paragraphe 2 - page 149, paragraphe 2; figures 9,10 * <br><br> ----- | 1-5 | |
| | | | DOMAINES TECHNIQUES RECHERCHES (Int. Cl.4) |

Le présent rapport de recherche a été établi pour toutes les revendications

| Lieu de la recherche<br>LA HAYE | Date d'achevement de la recherche<br>30-05-1985 | Examinateur<br>VISSER F.P.C. |
|---|---|---|